# EUROPEAN PATENT APPLICATION

(11) **EP 1 330 094 A1**
(43) Date of publication of application: **23.07.2003**
(21) Application number: 02354013.1
(22) Date of filing: 21.01.2002
(51) Int. Cl.: H04L 29/06

(54) **Process and apparatus for performing data transfer with a network**

(71) Applicant: Hewlett-Packard Company, Palo Alto, CA 94304 (US)
(72) Inventor: Brebner, Gavin, 38410 St. Martin D'Uriage (FR)
(74) Representative: Lloyd, Richard Graham

(57) **Abstract**

Communication process between a first system and a second system having communication access to a network, said process involving the steps of:
a) - establishing a first communication session between said first system and a physically movable data transport device comprising a storage with a first cache arranged to receive requests for information resources and a second cache arranged to receive responses to said requests for information; said first communication session involving
   - transferring within said first cache a sequence of requests generated by said first system;
   - transferring within said first system the contents of said second cache;
b) - establishing a second communication session between said data transport device and said second system involving the steps of:
   - transferring to said second system the requests contained within said first cache and forwarding said requests to the network;
   - receiving responses for said network and forwarding them into said second cache of said data transport device.

## Description

### Technical field of the invention

The invention relates to data communications and more particularly to a process and apparatus for performing data transfer with a network.

### Background art

The constant progress of the Information Handling System (I.H.S.) technology and that of the communication systems, particularly with the explosion of the Internet and intranet networks, has resulted in the development of an era of information and services.

More and more information and services are now available on the Internet network; however, there are still a number of situations where the connection to a network and particularly to the Internet network is not yet possible or easy to achieve. For many devices and systems, a direct connection to network infrastructure is not feasible at a reasonable cost. Therefore, as a user moves around, he or she passes through areas of good connectivity (home, office), and areas of low connectivity (on the road, at the shops). Mobile systems such as the electronic equipment fitted within a car, a boat etc... have very limited possibilities of communication, at least for a reasonable cost. Only exceptionally is a car fitted with an Internet connection. It is however clear that such a connection could be most useful and that the driver could benefit from the huge data and services available on the network. For instance, parameters and control settings of the engine could be checked and adjusted via a direct access to the server of the car manufacturer. More functions could be offered to the driver and the security within the car could be well improved if an Internet connection could be available. Even the comfort of the driver could benefit if, for instance, an in-car CD or media player could receive audio files from the Internet network.

The electronic environment of a car is typical of a variety of situations where only limited or intermittent access to a network is feasible. Indeed, although there are some technical possibilities to achieve a data communication with a network, for instance based on satellite communication or even the low rate Global System Mobile (G.S.M.) network, such communication is very limited. A data communication based on a wireless GSM connection only provides a low bandwidth channel, and this is insufficient for satisfying the potential needs existing in a car. For instance, the downloading of a map or the transfer of an audio file necessitates high volume of data transfer and a GSM transmission is not at all adapted for such needs. Future UMTS systems may offer improved bandwidth, but could also have the higher price necessary for the operators to recoup the cost of the necessary infrastructure.

The present invention is directed to improving the communication possibilities of many systems and devices, such as the electronic systems fitted within a car, where no permanent connection to a network is available.

### Summary of the invention

In brief, this object is achieved by a communication process between a first data processing system and a second data processing system, said second system comprising at least one server, said process comprising the steps of:
a) establishing a first communication session between said first system and a mobile device, said mobile device comprising a first cache arranged to receive data requests and a second cache arranged to receive responses to said data requests, said first communication session comprising at least one of
   - transferring to said first cache a sequence of data requests generated by said first system;
   - transferring within said first system data from said second cache;
b) establishing a second communication session between said mobile device and said second system, the second communication session comprising at least one of:
   - transferring to said second system the requests contained within said first cache and forwarding each said request towards an associated server;
   - receiving responses from said server and forwarding them into said second cache of said mobile device.

In preferred embodiments, the data requests can be HTTP get requests, the server being a web server accessible via an internet/intranet network, although application of the invention to other types of data requests and networks is not excluded.

In one embodiment, said first communication session and/or said second communication session is initiated upon detection of the presence of said mobile device within said first system and/or said second system respectively, said data requests and/or said responses being retained in said first and second caches respectively outside the first and second communications sessions.

In preferred embodiments, the mobile device has a limited range wireless link, such as a CCITT 802.11 or Bluetooth connection, with either said first system or said second system or both, said first communication session and/or said second communication session being initiated when a link to the respective system is established. There can therefore be provided a quite transparent transmission or "transport" of the information between the first system and the second systems.

One of said first or said second system can be a computer located within mobile equipment, such as a vehicle, having no permanent connection to the Internet or any other external data network.

In some embodiments, the second data processing system can have a permanent connection to an external data network, such as the Internet. This arrangement can provide unidirectional transfer of data (i.e. downloading) from the Internet to, for instance, a car computer in accordance with a set of URLs that are posted by the car computer.

In other embodiments, said first system can be a computer which is connected to an external data network, said second system being a server in, for instance, mobile equipment having no permanent connection to said external data network. This can provides a unidirectional transfer of data from, for instance, a car computer, acting as a web server, to the Internet (uploading), thus permitting data transfer from the car to the Internet.

The use of the process in both ways would permit bi-directional data transfer between the first and the second system.

Viewed from another aspect, the invention provides a mobile data transport device comprising: a data store and one or more communications interfaces for communicating with at least a first data processing system and a second data processing system during first and second communication sessions respectively. A control system within the device is arranged to: in a first data communications session, receive data requests from the first data processing system and store said requests in the data store and to transfer from said data store the data corresponding to previous data requests received from said first system; and in a second communications session; to transfer to said second system the data requests stored within said data store and to store within said data store the data received from said second system in response to said data requests.

In preferred embodiments, the control system can be arranged to provide to the first system a response during the first communications session if the data corresponding to a data request received from the first system is not stored within said storage. The control system can even be arranged to analyse the flow of requests being exchanged with said second system and to include in said response data derived from said analysis that indicates an expected the time when the request will be satisfied.

Further, the control system may be provided with means for analysing the response to a data request and for further generating additional data requests for completing the information that will be delivered to said first system. An HTML page, for example, will contain links to images or other text. A request for the page should ideally also result in a request for all other resources required. This is similar to the actions carried out by web browsers (e.g. Microsoft Internet Explorer) that can be configured to automatically fetch pages for later off-line access.

The above-described device can be incorporated as an ancillary function of an article - such as a pocket computer, mobile phone, key holder, a pen, a wrist watch, or a cigarette lighter, for instance - having another purpose and that is normally carried about a person - in a bag or in a pocket, for instance. Therefore, in accordance with the physical moves of the person carrying the device, there is provided the capability of data transfer between the first and second system, which is only limited by the storage capacity of the device.

A huge quantity of data can then be transported from one system to the other and this quantity is greater than the normal possibilities of transmission that would be allowed by presently deployed mobile data communication means, for instance GSM. As an example, one megabyte of data, an insignificant amount even for many small portable devices (PDAs often have 32MB of storage or more) would take around 15 minutes to transfer by GSM.

Since the progress of the data storage technology and the miniaturization of storage media products such as CompactFlash or Smartmedia data storage cards has been significantly improved there is provided the possibility to transfer hundreds of megabytes of data via the transfer. A significant advantage results from the fact that the limited data communication rate can be substituted by the huge capacity of data storage. It can be therefore rendered possible to "download" audio files or map files that may be useful to the driver for instance.

### Description of the drawings

An embodiment of the invention will now be described, by way of example only, with reference to the accompanying drawings, wherein:
Figure 1 illustrates a particular application of the process and apparatus for allowing the communication between car equipment and an Internet network.
Figure 2a illustrates the general architecture of the portable data transport device.
Figure 2b shows the organization of the cache.
Figure 3 is a flow chart illustrating the process executed by the agent during the first communication session between the car equipment and the portable data transport device or information relay.
Figure 4 is a flow chart illustrating the process executed by the Portable data transport device during the first communication session.
Figure 5 is a flow chart illustrating the process executed by the Portable Data transport device during a second session allowing communication between the portable data transport device and the entry point to the network.

### Description of the preferred embodiment of the invention

The process and apparatus will be more particularly described with reference to electronic equipment within a car. This is a situation where particular advantage can be obtained from the process herein disclosed because, first, a car user often spends a relatively large amount of time within their car and is therefore likely to *consume* a great amount of data during this time and, moreover, the sophisticated equipment present in modern cars could take significant advantage of the Internet connection. It should be noted, however, that the process and apparatus which are disclosed below could be advantageously used for any other kind of system requiring communication capabilities, e.g. boats, specific hardware equipment and even the furniture of a house, for instance, where it is not absolutely necessary to contemplate a fixed Internet connection. Further, while the description will particularly focus on the transfer of data from the network to the car computer (i.e. the downloading), it should be observed that the skilled man may straightforwardly adapt the description to arrange a unidirectional path from the car to a web server on the Internet (the uploading), which allows the latter to receive a huge quantity of data from the car computer.

The remaining part of the description will now be developed in relation of the arrangement of a unidirectional path between the car computer and the Internet network. Indeed, although the car is not fitted with any continuous or intermittent data connectivity, it can be seen that a high amount of data can be exchanged between the electronic components and circuitry within the car and an outside telecommunication network.

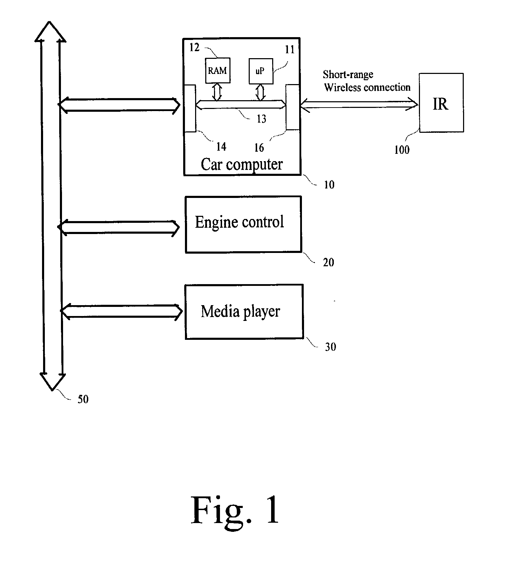

Figure 1 illustrates more particularly, and in schematic form, an environment of the electronic equipment of a car. The equipment includes a set of devices and control circuitries dedicated to handle the functional parts of the car, the security and even the comfort of the driver. As shown in figure 1, a car computer 10 provides the overall general control of the different components and communicates with more specific electronic control systems, such as engine control unit 20 dedicated to the control of the different parameters of the engine, via a shared communication mechanism e.g. a bus 50 . Car equipment further includes a media player 30 for reading CD or audio files. As shown in the figure, the different components of the car communicate with each other by means of a bus 50 allowing general control and communication with the car computer 10.

Car computer 10 includes a microprocessor 11 and storage memory including RAM storage 12. I/O device 14 allows communication with the internal parts of the car via bus connection 50. The general architecture of the car electronic circuitry will not be described in detail because it can vary to a large extent and does not form part of the present invention.

It is sufficient to observe that car computer 10 includes interface circuitry 16 which allows communication with a portable data transport device 100 which will be referred to as an Information Relay (IR), and information exchange with the latter, the information exchanged being defined by a URL. The information exchange is, in a preferred implementation, based on the HTTP standard protocol, and the requests that are exchanged between the car computer 10 and the relay 100 are HTTP GET requests. The use of the HTTPS [RFC 2660] protocol would be an extension that permits secure and private communication between the car computer and the network. Other suitable protocols could, of course, be used since the exact protocol chosen does not affect-the invention.

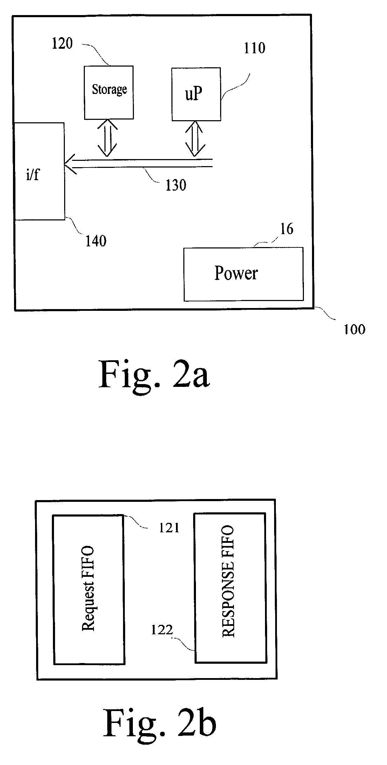

Figure 2 more particularly illustrates the general architecture of the Information Relay (IR) 100. Any physical form which has physical mobility and a communication interface can be used for embodying Information Relay 100, thus allowing data transport from a first location - the car equipment in this case- to a second location, which will act as the entry point to a network. Preferably, information relay 100 takes the form of a portable device that the user or the customer normally keeps about their person so that high capacity data transfer can be achieved in accordance with the physical moves of the user.

For instance, Information Relay 100 could be embodied as a pocket computer, a mobile telephone, a lighter, a key holder, a pen, a wristwatch, or piece of jewellery. In the preferred embodiment, the Information Relay 100 is embodied in the form of a pocket computer, such as the HP Jornada pocket computer manufactured by the Applicant of the present application, which permits the transport of huge amount of data as the user is walking and moving from one place to the other. Miniaturization of the electronic device may even allow the possibility to embody in a very small device such as, for instance, a key fob used also to carry the keys of the car.

Information relay 100 includes a processor 110, which is fitted with storage means 120 generally providing high storage capacity and possibly ROM storage for storing program instructions. Storage means 120 may include RAM storage, EEPROM storage, a CompactFlash card, or any storage means that can be used for storing the caches that will be described below. In addition, Information relay 100 is fitted with communication interface 140 that allows communication with the car computer 10 and a second system (not shown) that acts as an entry point to the network. Interface 140 provides one or more connection means of a suitable type. This could be, for instance a mid-range radio frequency (e.g. 802.11) link, a wired Ethernet connection, an infrared (e.g. IrDA) link, a short-range radio frequency (e.g. Bluetooth) link, USB, or even a simple serial connection (e.g. RS232).

An antenna is provided, if required, as well as a suitable power supply 16 (this could be battery-based or solar powered, for instance). Information relay 100 further includes electronic circuits for allowing caching and proxy capabilities for the purpose of allowing intermittent communication of get requests and corresponding responses between the car computer and the entry point to the network, and thus allowing Internet access by the car equipment.

More particularly, Information Relay 100 is fitted with communication means allowing transparent and automatic communication between car computer 10 acting as a first system (in this case, an information consumer) and a second system acting a entry point to a network which can provide the information which is requested by the first system. While figure 2 illustrates a typical configuration employing wireless connectivity, it is clear that the arrangement can straightforwardly be adapted to use a wired connection, for instance a RS232 serial wire communication that could be placed between the key and the car computer when the driver uses his key for starting their car.

Figure 2b shows the organization of the storage of the Information relay 100. The storage comprises a first store 121 for the purpose of queuing U.R.L. requests that are received during a first session of communication between the car computer and the relay 100. Further, the storage 120 comprises a second cache memory that is used for storing the responses that Information Relay 100 received from the Internet network during a data communication session with the second system. It should be noticed that the second system can be any conventional personal computer fitted with Internet or Intranet connection capability. In particular, the second system could be a general-purpose office computer that is fitted with high bandwidth Internet access. Alternatively, the second system can be embodied in the form of a dedicated terminal that is specially arranged and designed for allowing access to the Internet network whenever the Information Relay 100 enters within its proximity. Such a device could be arranged at the entry of motorways, or any particularly place where a data communication shows to be useful between the car computer and the outside world in an effective and transparent manner for the driver. An 802.11 based station connected to the (wired) backbone network) could be a typical example of such a terminal.

In the preferred embodiment, the Information Relay 100 caches requests for data resources that are defined by a U.R.L and further stores the data received in response to said requests. Information Relay 100 is thus acting somewhat as a caching proxy, providing intermittent high volume storage transfer with car computer 10.

It should be noticed that the information relay device 100 should not be confused with the different types of personal ID cards containing information belonging to the owner, such as a credit cards for instance. The information relay functionality that is described herein is not designed for the secure storage of data. Data is transported via this device, thus allowing an easy and effective communication with systems having no other possibility for connection to a network. Further, there is no relation between the data that is conveyed through the device and the personal data owned by the person carrying the device. Therefore, it should even be possible to contemplate that the device can be used for the purpose of transporting data owned by third parties for allowing easy wireless connections. The device is, therefore, acting very much as a network connection; it is a conduit for information. As for any network connection, if additional security is required, encryption of the data at the source / destination can be applied - the Information Relay itself having no need to be able to understand the bytes being transported.

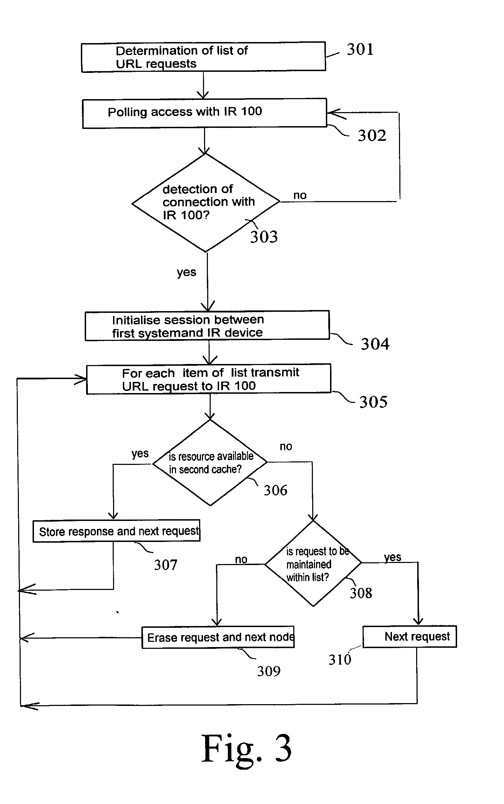

Referring now to figures 3, 4 and 5, there will now be described the different processes that are involved in this example for the purpose of allowing a transparent exchange of URL between the car computer and the network.

Considering for instance a particular application being run within the car computer 10. Such an application could be a media player, a map reader, engine control software etc.... The process which is operated within the application, or an agent running within car computer 10 is particularly illustrated in figure 3.

The process starts with a first step 301 where the application determines a list of particular URLs that are to be presented at the next session with the information relay. The URL can be, for instance, the location of an audio file such as an mp3 or wmf file, a map file, a zip package, or a Hyper Text Markup Language (HTML) page. Generally speaking, the determination of the sequence of URL requests is based on the requests which were already formulated previously during preceding sessions between the car computer and the information relay 100 and which still remain unsatisfied. The detection of special situations can also lead to the introduction of new requests. For instance, should the car enter within a new area of a country, this can be detected and give rise to the need for a new map to be downloaded; this detection may for instance result in a new URL request being incorporated within the list of items. Further, the application completes the sequence URLs with any new requests specifically formulated by the driver or passengers , e.g. new requests for audio files for instance.

In a step 302, the process performs a polling to determine the possible proximity of the information relay 100. As is known by the skilled man, for some connection technologies the communication controllers themselves may perform (by polling or other means) the detection of the presence of another device, and signal this to the rest of the system via a "event", interrupt signal, or similar. In this case, the step 302 becomes a point where execution is stalled awaiting an "connection detected" event.

This polling leads to a step 303 where, at regular intervals, a test is performed to determine whether a communication can be established with the information relay 100.

If this communication is not possible, the test of step 303 fails and the process returns back to step 302. On the contrary, should a communication be possible with information relay 100 - e.g. because the driver got in the car - then the process proceeds to a step 304 where a first communication session is initialised between the car computer 10 and information relay 100. Initialising a communication in this way is a well-known process and need not be further described. It is sufficient to mention that, in accordance with the communication protocol being considered, a communication socket is established between the car computer - acting as a first system - and the Information relay 100. It should be observed that this communication can be made completely transparent to the user.

Then in a step 305, for each request contained within the list of URL requests computed in step 301, the application transmits the corresponding URL to the information relay 100.

In a step 306 the response received from the information relay 100 is analysed and a test is carried out to determine whether the data corresponding to the considered URL request is available within the second cache of the information relay 100. If such data is available, then the process goes to a step 307 for the purpose of storing the response to the URL request. The process then goes back to step 305 for the purpose of processing the next URL request from the list of step 301.

Conversely, if the response received from the information relay 100 shows that no data is available within the second cache, then the process proceeds from step 306 to a step 308 where a test is performed to determine whether the considered URL request is to be maintained or not within the list of requests to be presented at the next communication session between information relay 100 and the network. In one particular embodiment, the response that is provided by the information relay comprises an evaluation of the time at which the corresponding resources are likely to be available. This is achieved by means of a statistical analysis of the occurrence of the communication sessions between the information relay and the second system providing access to the network. In accordance with the estimation of the time at which the considered request will be available, the application may decide whether or not to discard the request from the list - carried out in a step 308.

If the URL is to be discarded, this is done in a step 309 and the process then proceeds back to step 305 for the purpose of processing the next item in the list of requests.

If the URL is to be maintained within the list of requests, then the process proceeds back to step 305.

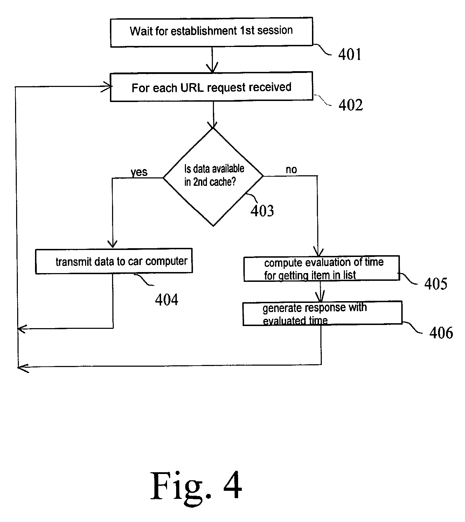

With reference to figure 4, there will now be described the process which is performed by information relay 100 for the purpose of allowing continuous update of the first and second cache storage 121 and 122.

In a step 401, the process waits upon the detection of the establishment of a first communication session with the car computer.

In a step 402, the process enters into a FOR NEXT loop for the purpose of processing each item of the list of requests being received.

In a step 403, a test is performed to determine whether one URL request has corresponding data stored within the second cache and, if so, this data is transmitted to car computer 10 in a step 404.

If the data is not available, then the considered URL is stored within first cache 121 in a step 405, and the information relay computes an evaluation of the time required for satisfying the considered request. This is one particularly useful embodiment, which permits the report- when the data is not available - of an estimation of the time at which such data will be most likely available, based on a statistical analysis of the occurrence of the second session that will be described hereinafter.

In a step 406, that estimation is forwarded to the car computer and the process proceeds back to the step 402 for the purpose of processing the next request. The application is then made aware that it has to issue a new request later at the next communication session.

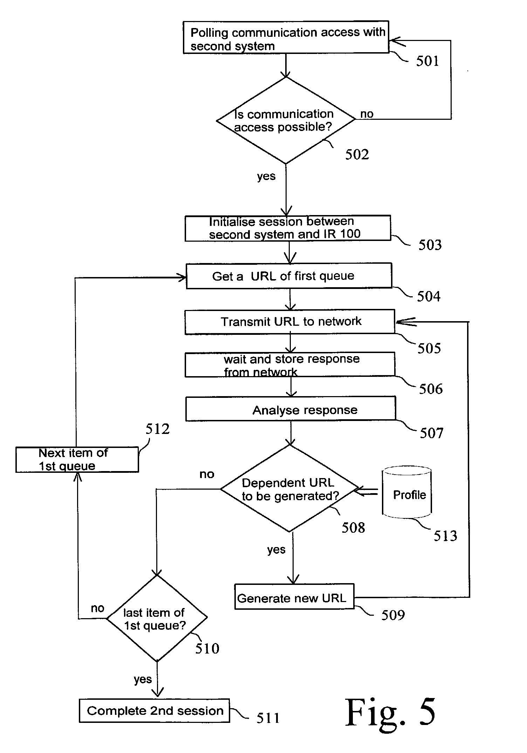

Figure 5 illustrates the process that is executed by the information relay 100 for the purpose of entering into a second communication session with the second system, acting as an entry point to the Internet network. For this purpose, the information relay is fitted with detecting means for detecting proximity with such an entry point. Many devices and systems can be arranged to act as such an entry point. This can be a general-purpose personal computer which has an Internet connection, but also more specific devices acting as entry to the Internet.

The getting of the information through the network and the storage of this information within the second queue 122 is achieved during a second session by means of which the information relay gets an access to the network. For this purpose, the information relay performs a process that starts with a step 501, which is a polling test for determining whether a communication with a second system is possible.

A step 502 is a test for determining whether the communication can be established, in which case the process proceeds to a step 503 and, conversely, the process proceeds back to step 501.

If the communication can be established, the process initialises a second communication session between the information relay 100 and the second system in step 503.

Then, in a step 504, the process enters within a FOR -NEXT loop for the purpose of successively processing each item stored within the first queue 121.

In a step 505, the information relay uses the communication channel for the purpose of forwarding the URL request to the network.

When the response is provided back by the network, the latter is received and stored within the second queue in a step 506.

In a step 507, the response is being analysed for the purpose of determining whether the considered request should be investigated further. In one preferred embodiment, the analysis particularly leads to the determination of additional URL requests in accordance with the contents of the received response. Therefore, should one HTML page contain additional links, the process proceeds to a test 508 for determining whether these additional URLs should be investigated. Step 508 is performed in combination with data contained within a profile 513. If the test of step 508 concludes that there is a need for additional investigations, then the process proceeds to a step 509 where the new URL requests are generated and then the process goes back to step 505.

Conversely, if the answered received from the network shows that no further URL request are to be generated, then the process proceeds with a step 510 where the current URL request is being checked to determine whether it is the last item of the queue.

If the answer is no, then the process goes to a step 512 and then 504 where the next item is considered and processed.

If the test of step 510 shows that the last item of the first queue has been processed, then the second communication session is completed in a step 511.

It can be seen from the flowchart above, that the Information relay 100 provides the car computer with high amount of data reception. This is particularly useful since, generally speaking, the transmission or reception of a high volume of data by means of the known connection means - such as GSM - is very expensive. The Information Relay permits to substitute to a high costly communication technique a low cost storage capability that permits the electronics parts of a car to take advantage of the huge amount of data available on the Internet network.

It should be noticed that, since the information relay provides communication with entry points, those could even be used for providing specific data depending on the physical location of the car. It could be contemplated, by using this technique, to allow the driver to download and received within his/her car computer the data of the map of the particular area of the country where he is travelling. Automatic transfer of data could be carried out when the driver is filling his tank, or entering a motorway.

Although the description has centered on the arrangement of a unidirectional path from the Internet to the car computer, it is clear that the same techniques can be applied to organize the reverse communication path, by which a mobile computer, such as a car computer, can act as a server for a computer requesting information from this server. In this case, the first system can be a fixed computer-e.g. a car manufacturer server - and the second system is the car computer providing the data in response to the URL requests submitted by the first system.

By arranging an Information relay with two sets of two queues, each, there can be provided a bi-directional communication path between the two systems, thus allowing a peer-to-peer configuration.

The invention carries out the concept of human information transport vehicle which permits the transport of a huge amount of data, far away from the possibilities which are allowed by known communication means, such as GSM for instance. By using the specific process disclosed herein, by the exchanges of requests that are allowed by the portable transport device, the requests are forwarded to the network and the data is recovered back by the requesting system.

## Claims

1. Communication process between a first data processing system and a second data processing system, said second system comprising at least one server, said process comprising the steps of:
a) establishing a first communication session between said first system and a mobile device, said mobile device comprising a first cache arranged to receive data requests and a second cache arranged to receive responses to said data requests,
said first communication session comprising at least one of
- transferring to said first cache a sequence of data requests generated by said first system;
- transferring within said first system data from said second cache;
b) establishing a second communication session between said mobile device and said second system, the second communication session comprising at least one of:
- transferring to said second system the requests contained within said first cache and forwarding each said request towards an associated server;
- receiving responses from said server and forwarding them into said second cache of said mobile device.

2. A communication process according to claim 1 wherein said first communication session and/or said second communication session is initiated upon detection of the presence of said mobile device within said first system and/or said second system respectively, said data requests and/or said responses being retained in said first and second caches respectively outside the first and second communications sessions.

3. A communication process according to claim 2 wherein said mobile device has a limited range wireless link with said first system and/or said second system, said first communication session and/or said second communication session being initiated when the link is established.

4. A communication process according to any preceding claim wherein one of said first or said second system is a computer located within mobile equipment having no permanent connection to an external data network.

5. A communication process according to claim 4 wherein the mobile equipment is a vehicle.

6. A communication process according to any preceding claim, wherein the second data processing system has a permanent connection to an external data network.

7. A communication process according to any of claims 1 to 5, wherein said first system is a computer which is connected to an external data network, said second system being a server in a mobile computer having no permanent connection to said external data network.

8. A process as claim in any preceding claim wherein the data requests are HTTP get requests and the external data network in an internet/intranet network.

9. A mobile data transport device comprising :
- a data store (121, 122)
- one or more communications interfaces (140) for communicating with at least a first data processing system (10) and a second data processing system during first and second communication sessions respectively; and a control system arranged to:
in a first data communications session,
receive data requests from the first data processing system and store said requests in the data store and to transfer from said data store the data corresponding to previous data requests received from said first system;
- in a second communications session;
- to transfer to said second system the data requests stored within said data store and to store within said data store the data received from said second system in response to said data requests.

10. A device according to claim 9 wherein the control system is arranged to provide to the first system a response during the first communications session if the data corresponding to a data request received from the first system is not stored within said storage.

11. A device in accordance with claim 10 wherein the control system is arranged to analyse the flow of requests being exchanged with said second system and to include in said response data derived from said analysis that indicates an expected the time when the request will be satisfied.

12. A device according to any of claims 9 to 11 including means for analysing the response to a data request and for further generating additional data requests for completing the information that will be delivered to said first system.

13. A device according to any of claims 9 to 12 incorporated as an ancillary function of an article having another purpose and that is normally carried about a person.

14. A device according to any of claims 9 to claim 13 **characterized in that** it communicates via wireless communication.

15. Apparatus allowing communication between a first system and a communication network, said apparatus comprising processing means and storage capacity for storing a first and a second cache storage, said first cache and said second cache respectively containing requests and responses for information and **characterized by**:
- means for establishing a first communication session with a first system and for receiving and storing within said first cache the requests generated by said first system;
- means for delivering to said first system during said first session the contents of said second cache;
- means for establishing a second communication session with a second system providing access to a network and for transmitting to said second system the requests contained within said first cache;
- means for receiving and storing within said second cache the responses received from the network via said second system during said second session.

16. Apparatus according to claim 15, that is portable.

17. Apparatus according to claim 16 incorporated as an ancillary function of an article having another purpose and that is normally carried about a person.

18. Apparatus according to any of claims 15 to claim 17 **characterized in that** it communicates via wireless communication.

19. Apparatus according to any of claims 15 to 18 **characterized in that** it includes means for analysing the response to a request and for further generating additional requests for completing the information that will be delivered to said first system.

20. Apparatus according to claim 19 **characterized in that** it includes means for analysing the statistics regarding the communications with said first and second systems and that it further includes means for providing to said first system an estimation of the time required for getting a response corresponding to said request.
